# EUROPEAN PATENT APPLICATION

(11) **EP 4 835 309 A1**
(43) Date of publication of application: **04.11.2026**
(21) Application number: 25460033.1
(22) Date of filing: 12.08.2025
(51) Int. Cl.: F16B 13/08, B66C 1/54, E04G 21/12, E04G 21/14

(54) **AN AUTOMATIC CONNECTOR AND THE USE OF THE AUTOMATIC CONNECTOR**

(30) Priority: 30.04.2025 PL 45193625
(71) Applicant: Wojtasik - Pracownia Architektoniczna Lech Wojtasik, 64-920 Pila (PL)
(72) Inventor: Wojtasik, Lech, 64-920 Pila (PL)

(57) **Abstract**

The subject of the invention is an automatic connector, the use of the automatic connector and a construction wall, which is used in prefabricated building construction, the edge profile of which contains connectors sockets according to the invention.

A connector according to the invention is characterized in that a gripper's body (A) has the form of a cylinder with a perpendicular longitudinal slot, in which slot a pull rod system is attached consisting of at least two jaws connected by a pull rod, advantageously two jaws (B) and (C), where each of the jaws (B) and (C) ends on one side with a toothed wall in the form of an arc, and the jaws (B) and (C) are attached to the longitudinal slot in a moveable manner, as well as the jaws (B) and (C) are attached to each other in a moveable manner, with the jaws (B) and (C) being interconnected by pull rods (E), which pull rods (E) are attached in a revolving manner to a cylinder (F) by means of a pin (H), where the cylinder (F) is attached in a sliding manner to the upper part of the body (A), which is closed by a cover (K), and a spring (S) is placed between the cylinder (F) and the cover (K), while the cover (K) has a opening for a shaft (J), with the shaft (J) on one side being connected to the cylinder (F) and on the other side to an actuator, with the jaws (B) and (C) in the lower part having on their lateral surfaces longitudinal through-holes, situated diagonally towards the lengthwise axis of the body (A), whereas in the side walls of the bottom part of the body (A) openings are made with a diameter corresponding to the diameters of the pins (D) and the width of longitudinal holes, using which pins (D) the jaws (B) and (C) are connected to the body (A), with the toothed walls of the jaws (B) and (C) having the form of an arc with a radius corresponding to the socket's (G) internal radius, where the walls of the spline teeth are inclined relative to the horizontal plane at an acute angle, whereas the socket (G) has the form of a hollowed-out cylinder, the internal wall of which has on its surface teeth that correspond to the teeth on the gripper jaws (B) and (C).

## Description

The subject of the invention is an automatic connector, the use of the automatic connector and a construction wall, which is used in prefabricated building construction, the edge profile of which contains sockets of connectors according to the invention. Connectors, fasteners and systems used to lift and move objects, especially heavy and significant components constitute an area of technology.

The state of the art comprises various types of equipment, equipped with elements that are attached on a cross-beam forming part of a crane, gantry, CNC machine or other equipment used in the handling, construction or movement of products.

For example, from the patent description Pat.219574 a crane-assembly system and a way of lifting and mounting heavy loads are known. The invention is used to lift heavy loads from the ground and to move them horizontally onto an existing structure. A system consisting of at least two lines for movement, each containing at least one vertical crane tower, at least one horizontal hoisting girder, combined with a crane tower and with an existing structure by means of support beams, at least two sliding casts, at least two horizontal slide guides and at least two cable lifts, comprising also power supply and means of control, with the above elements being connected in such a way that the load can be transported both vertically and horizontally.

From the description of patent application P.403860, a transport cross-beam for transporting of various types of materials, which has an elongated upper load beam with a laterally built set of arms containing lifting slings, advantageously with attached lower load beams transverse to the upper load beam. The longitudinal upper load beam has advantageously on its ends lugs for hanging the cross-beam to a hitch of a suspended mining cable car, between the arms it has handles for manual transport of the cross-beam and containers for lifting slings. The arms have holes for mounting the lifting slings with built-in upper safeguards integrated with the arms. The upper safeguards are flat bars mounted in a sliding manner to the upper surface of the arms containing handles for sliding them, fixing slots and chain slots. Every hole has its own upper safeguard. The lower load beams contain lower safeguards to protect the lifting slings from disconnecting. The spacing between the arms is greater than the spacing between the pairs of these arms. The cross-beam has any number of built-in arms with attached lifting slings with lower load beams.

The description of the patent application P.288944 reveals a device for the implementation of the method of horizontal movement and levelling of series of foundation elements in the construction industry, which is a set consisting of a cross-beam with sliding hangers, to which the upper horizontal strut with a turnbuckle assembly consisting of a sleeve and bolt elements with suitable shelves for the suspension of edge sections. The hangers have adjusting bolts. Moreover, the assembly includes a lower horizontal strut with clamps for auxiliary longitudinal beams.

A hook revealed in Pat. 181299 consists of a threaded pin and a hook part, with the hook part having a cross-sectional and longitudinal shape of a wedge narrowing towards the hook part's ridge edge and ending with a triangle-shaped nose. The lateral surfaces of the hook part are concave.

Transport anchors are also known. From the description of the patent application P.427814 a transport anchor for walls with voids is known. The anchor according to the invention, made of a rod with a bent middle part, the ends of which are pushed through the holes of a crosspiece joining them rigidly, forming parallel arms, which is characterized in that the bar forming the arms is twisted along its axis over its entire length or set section and has a quadrilateral or hexagonal cross-section, while the crosspiece is a steel element with a quadrilateral cross-section and has an inner filling in the form of polyurethane foam. From another description of the application P.435219 the anchor made of a rod with a bent centre part and the arms connected by a crosspiece is characterized by the fact that the crossbar contains cut-outs in which the arms are placed, and ends which are clamped on the arms.

The solutions known from the state of the art have limited use when lifting and moving objects, especially oversized components of significant weight, which would allow for the rapid assembly/ dismantling of the elements used in this process. At the same time, the solutions known from the state of the art only enable the transport of the elements, while it is desirable that the elements of the transport system could immediately form elements of the assembly system or of interconnection of the elements.

The solution according to the invention eliminates the drawbacks and disadvantages resulting from the use of solutions from the state of the art.

The goal of the invention is to develop a solution that allows for temporary connection of elements in production or assembly systems, which is characterized by the ability to transfer forces similar to a bolt connector, but which has the ability of a much faster and simpler application, while at the same time obtaining the possibility of connecting parts of the structure, e.g. building elements used in the construction of prefabricated buildings.

The essence of the invention, which is an automatic connector containing a gripper and a socket, where the gripper has a body, inside which a pull rod system is attached, consists of the gripper body having the form of a cylinder with a perpendicular longitudinal slot, in which slot a pull rod system is attached consisting of at least two jaws connected by a pull rod, advantageously two jaws, where each jaw ends on one side with a toothed wall in the form of an arc, and the jaws are attached to the longitudinal slot in a moveable manner, as well as the jaws are attached to each other in a moveable manner, with the jaws being interconnected by pull rods, which pull rods are attached in a revolving manner to a cylinder by means of a pin, where the cylinder is attached in a sliding manner to the upper part of the body, which is closed by a cover, and a spring is placed between the cylinder and the cover, while the cover has a opening for a shaft, with the shaft on one side being connected to the cylinder and on the other side to an actuator, with the jaws in the lower part having on their lateral surfaces longitudinal pass-through holes, situated diagonally towards the longitudinal axis of the body, whereas in the side walls of the bottom part of the body openings are made with a diameter corresponding to the diameters of the pins and the width of longitudinal holes, using which pins the jaws are connected to the body, with the toothed walls of the jaws have the form of an arc with a radius corresponding to the socket's internal radius, where the walls of the spline teeth are inclined relative to the horizontal plane at an acute angle, whereas the socket has the form of a hollowed-out cylinder, the internal wall of which has on its surface teeth that correspond to the gripper jaw teeth.

It is advantageous when one of the jaws has a T-shaped horizontal cross-section, while the other jaw has a U-shaped horizontal cross-section.

It is also advantageous when the walls of the spline teeth on the walls of the jaws are inclined relative to the horizontal plane at an acute angle, advantageously in the range between 30 and 60 degrees.

In addition, it is advantageous when the diameter of the hollowed-out cylinder inside the socket is approximately equal to the external diameter of the gripper body in its lower section, on which section the jaws are attached.

It is also advantageous when in the lower part the body cylinder changes into the form of a truncated cone, and it is particularly advantageous when an electrical connector is placed in the body.

It is additionally advantageous when the longitudinal holes in the jaws B and C are situated in such a way that they are inclined upwards to the inside of the body at an acute angle, preferably 45 degrees.

It is advantageous when the body cylinder in its upper part expands to form a ring with mounting holes, while it is additionally advantageous when above the ring, the body cylinder narrows again by taking the form of a hollowed-out cylinder, inside which the cylinder of the pull rod system moves.

It is also advantageous when the cylinder of the pull rod system in the lower part has a slot allowing the insertion of pull rod rings, and it is also advantageous when the cylinder in its upper part has at least one threaded hole, allowing a shaft to be bolted to it, preferably centrally located.

In addition, it is advantageous when the cover has at least one pass-through hole, preferably centrally located.

It is advantageous when the gripper's body and the individual elements of the pull rod system are made of steel, advantageously stainless steel, and it is also advantageous when the socket is made of steel, advantageously stainless steel.

The use of an automatic connector described above constitutes an invention, the essence of which is that the gripper, which is a cylinder with a perpendicular longitudinal slot, in which a pull rod system is installed, consisting of at least two jaws connected by a pull rod, advantageously two jaws, is attached to the lifting system, in particular through automatic transport cross-beam, while the socket which has the form of a hollowed-out cylinder, the inner wall of which has teeth on its surface corresponding to the teeth on the gripper jaws, forms a part of a prefabricated building wall.

The use of the automatic connector socket in the construction of the building wall also constitutes an invention, which is a building wall, and the essence of the invention is characterized in that on at least one edge of the prefabricated wall there are mounted profiles, preferably made of steel sheet, equipped with sets of sockets, which are conveniently arranged in equal distances from each other, most advantageously at the spacing of an Mp module (fixed distance).

The use of the solution presented in the invention enables the following technical and utility effects:
- the possibility of quick and safe connection of the elements of the lifting system to the element intended to be lifted from the ground and transported elsewhere,
- the use of a connector socket integrated with the element being transported for other purposes, including interconnection of the elements, with an example being the possibility of connecting a vertical wall of a prefabricated building to its floor/ceiling slab,
- automation of the transport and movement process, as well as of construction of building structures using prefabricated elements.

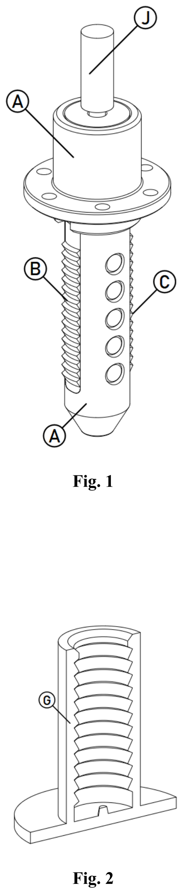

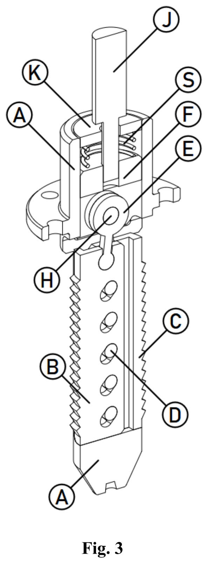

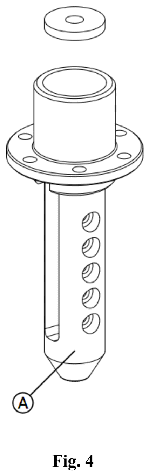

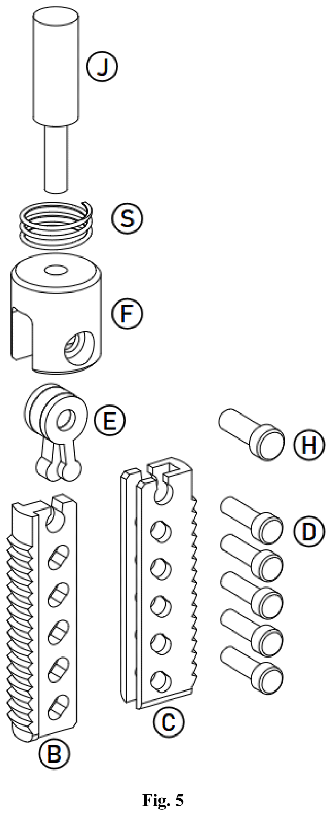

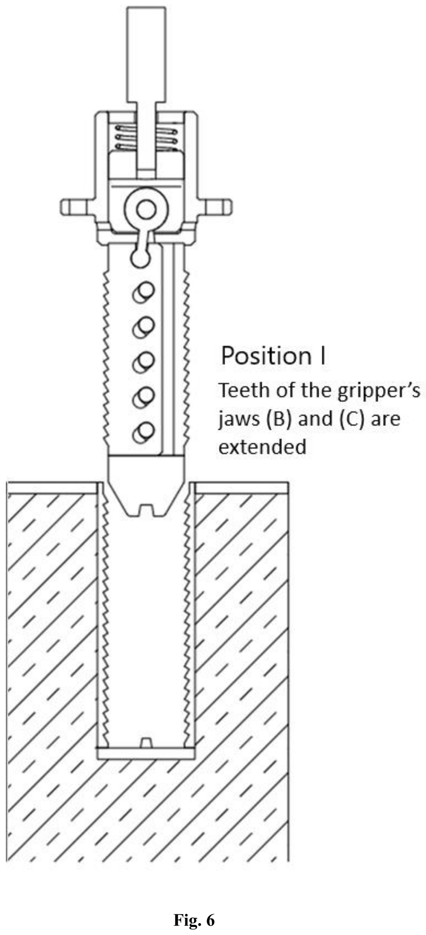

The subject of the invention in an example, but not limiting, implementation was presented in diagrams, where on figures Fig. 1 and Fig. 2 a gripper of an automatic connector according to the invention (Fig.1) and a socket (Fig. 2) were presented, respectively. The construction of the gripper is presented in cross-section on Fig. 3, while its body in its entirety is shown in the view on a separate figure (Fig. 4). On Fig. 5 individual elements of the gripper's pull rod system are shown in an expanded view. The principle of operation of the connector according to the invention was depicted on subsequent figures, Fig. 6 - Fig. 9, showing the position of the gripper and its components in relation to the socket during operation, where on:
- Fig. 6 shows the system in position I in which the teeth protrude outwards;
- Fig. 7 shows the system in position II in which when the gripper is inserted into the socket, the teeth are retracted;
- Fig. 8 shows the system in position III (working position) in which the teeth are protruding in the socket;
- Fig. 9 shows the system in position IV in which the actuator retracts the teeth and allows the gripper to be retracted out of the socket.

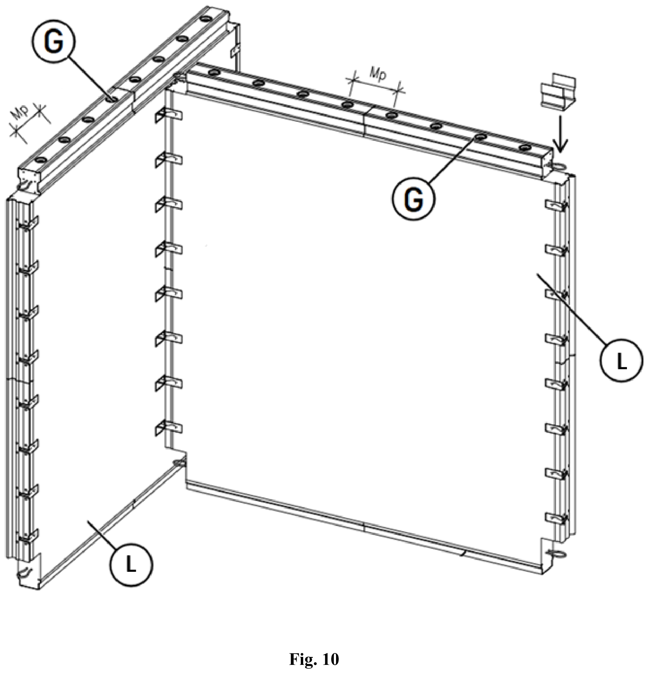

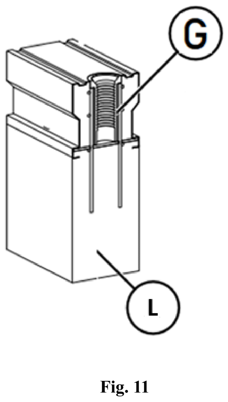

On Fig. 10 the layout was shown of the walls according to the invention, the upper edge profiles of which contain an automatic connector socket, while the socket itself in a cross-section on a fragment of the wall is shown on Fig. 11.

The invention in the example implementation constitutes an automatic connector consisting of a gripper and a socket.

In the example implementation the socket G has the form of a hollowed-out cylinder, the inner wall of which has teeth on its surface. Whereas the gripper consists of a body A and a pull rod mechanism.

The body A of the gripper has the form of a cylinder with a perpendicular longitudinal slot, in which slot pull rod system is attached consisting of two jaws B and C connected by a pull rod. The jaws B and C are finished with one side with a toothed wall, the surface of which has an arched outline. The toothed walls of the jaws B and C have the form of an arc with a radius corresponding to the interior radius of the socket G, where the walls of the spline teeth are inclined relative to the horizontal plane at an acute angle. The walls of the spline teeth on the walls of the jaws B and C are inclined relative to the horizontal plane at an acute angle, 30 and 60 degrees.

The teeth located on the surface of the internal wall of the socket G correspond in dimensions and shape correspond to the teeth in the jaws B and C of the gripper. The outer diameter of the gripper body A in its lower section, on which the jaws B and C are attached, is equal to the diameter of the cylinder hollowed-out in the socket G.

The jaws B and C in the lower part have on their lateral surfaces longitudinal pass-through holes, situated diagonally towards the longitudinal axis of the body A, while in the side walls of the lower part of the body A openings are made with a diameter corresponding to the diameters of the pins D and the width of the longitudinal holes, using which pins D the jaws B and C are connected to the body A. The toothed jaws B and C are attached to the longitudinal slot in a moveable manner and simultaneously the jaws B and C are attached to each other in a moveable manner.

The jaws B and C are connected to each other by means of pull rods E, with the pull rods attached in a revolving manner to the cylinder F using the pin H. The cylinder F is attached in a sliding manner to the upper part of the body A, which upper part of the body is closed with a cover K. Between the cylinder F and the cover K, a spring S is located, while the cover K has an opening for a shaft J, with the shaft J on one side being connected to the cylinder F and on the other side to an actuator.

The jaw B has a T-shaped horizontal cross-section. The jaw C has a U-shaped horizontal cross-section.

The body A cylinder in the lower part changes into the form of a truncated cone, in which advantageously an electrical connector is placed.

Longitudinal holes in the jaws B and C are situated in such a way that they are inclined upwards to the inside of the body at angle of 45 degrees. The body cylinder in its upper part expands to form a ring with mounting holes, above which the body cylinder narrows again by taking the form of a hollowed-out cylinder, inside which the cylinder F moves.

The cylinder F in the lower part has a slot allowing the insertion of pull rod E rings, and in its upper part the cylinder F has a threaded hole, allowing a shaft J to be bolted to it, which is centrally located.

The cover K has a centrally located pass-through hole.

The gripper body A and the individual elements of the pull rod system are made of stainless steel.

The socket G is also made of stainless steel.

In another example implementation, not shown on the drawing, an electrical connector is placed in the lower part of body A.

### Operating principle

In an example implementation, the automatic connector according to the invention is used to temporarily connect elements in production or assembly systems and to allow a preliminary/temporary interconnection of certain parts of a building structure.

The connection consists of an appropriate connector attached on a cross-beam forming part of a crane, gantry, CNC machine or another such equipment and of a socket attached to the element being moved. The connector consists of a steel body inside which the specially shaped jaws move. When the connector is inserted into the socket, the jaws spread automatically. Under the working load the jaws lock in the open position, while pressing on the inner walls of the socket. This effect makes it impossible to disconnect the elements during the lifting process. It is only possible to release the connection after the load is released, which in practice means after the item transfer operation has been completed. The release occurs after the connector's releasing pull rod is moved upwards. It is then possible to retract the connector from the socket and to disconnect the elements. Depending on the variant of the implementation the pull rod is activated either by an electric actuator of any type or by a hydraulic actuator or by an electromagnet or by a hand lever as well as other such devices.

The principle of operation of the connector was depicted on a figure, where on Fig. 6 - Fig. 9 the relative position of the gripper and its components in relation to the socket during operation was shown.

Position I (Fig. 6) - the teeth protrude outwards. As a result of the action of the spring the jaws are in a protruding position. The oblique slots in the jaws make their lower position at the same time a position outermost to the body.

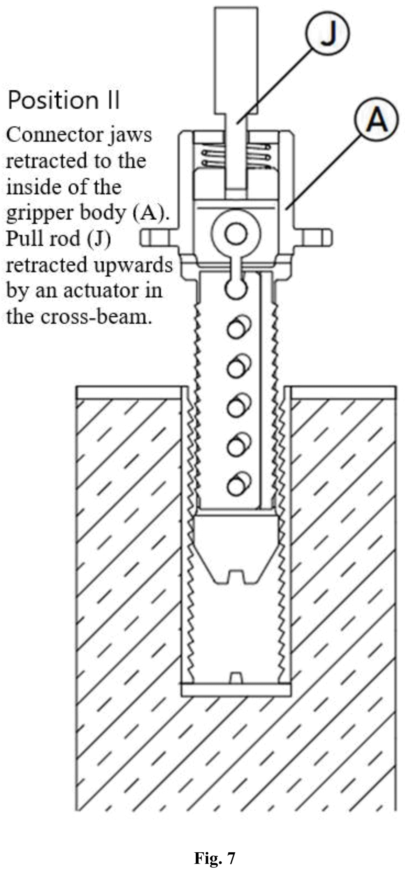

Position II (Fig. 7) - stages of inserting the gripper into the socket, the teeth retract. Connector jaws retracted to the inside of the body. Pull rod retracted upwards by an actuator in the cross-beam. The connector is inserted vertically from above into the socket. As a result of an application of force and the shaping of the teeth, the jaws retract when being inserted and then protrude out.

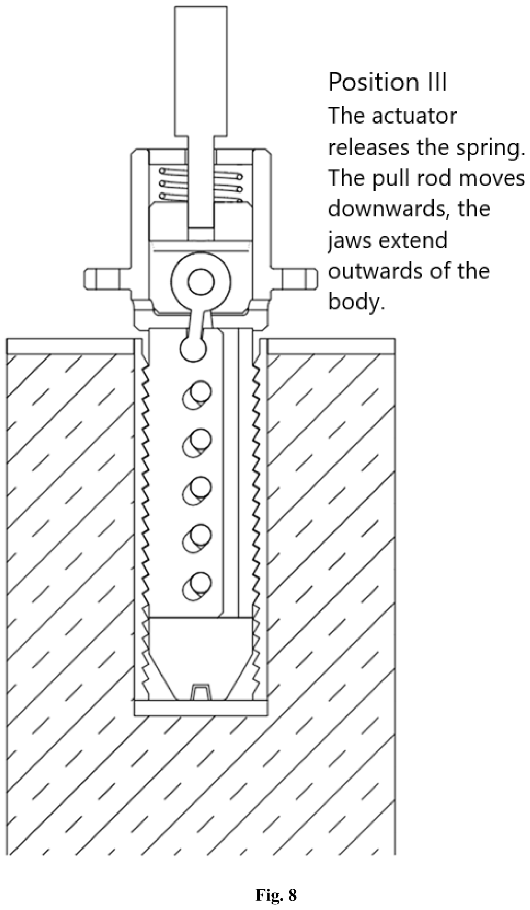

Position III (Fig. 8) - the teeth are protruding in the socket. The actuator releases the spring. The pull rod moves downwards, the jaws extend outwards of the body. When the element is being raised upwards, the jaws are automatically locked in the outward position, the weight of the raised element increases the force of the jaws' pressure on the socket walls and prevents accidental unlocking of the connection during the movement.

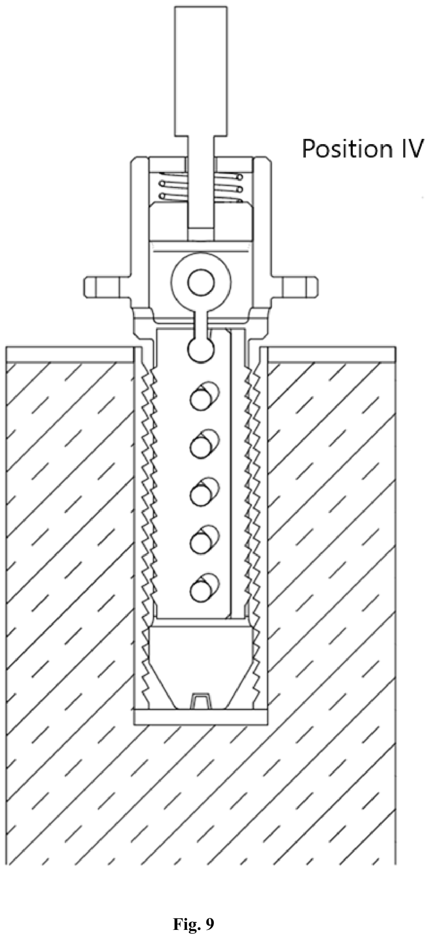

Position IV (Fig. 9) - the actuator retracts the teeth and allows the gripper to be pulled out of the socket. After placing the transported element at the intended position, the jaws' pressure on the socket walls subsides and the actuator-induced upward motion of the pull rod overcomes the spring pressure and allows moving the jaws upwards while retracting them back inside the body. In this position, it is possible to freely retract the connector from the socket.

The connector is characterized by the ability to transfer forces similar to a screw connector, however it has the ability of a much faster and simpler application. The use of such an automatic connector constitutes an invention in which the gripper, having the form of a cylinder with a perpendicular longitudinal slot, where a pull rod system is attached consisting of two jaws B and C connected by a pull rod, being attached to a lifting system, in particular through an automatic transport cross-beam. The socket G of the connector, having the form of a hollowed-out cylinder, the inner wall of which has on its surface teeth corresponding to the teeth in the jaws B and C of the gripper, constitutes an element of a prefabricated construction wall L, evenly spaced on the edge profile of the same wall. As a result, the socket G inside which the automatic connector gripper is temporarily attached has a dual use. It allows the raising and transporting of walls L, in the edge profile of which the sockets G are placed. The second use of the connector sockets enables a connection of vertical walls of the prefabricated building with the floor/ceiling slabs, through which connectors are passing which connect the vertical walls with perpendicular floor/ceiling slabs.

As a result of the developed solution, the subject of the invention is also the structural wall L, in an example implementation a prefabricated wall, on the edges of which steel sheet profiles are mounted, equipped with sets of sockets G, which are arranged in the spacing of the Mp module.

## Claims

1. An automatic connector containing a gripper and a socket, where the gripper has a body, inside which a pull rod system is attached, **characterized in that** the gripper body (A) has the form of a cylinder with a perpendicular longitudinal slot, in which slot a pull rod system is attached consisting of at least two jaws connected by a pull rod, advantageously two jaws (B) and (C), where each of jaws (B) and (C) ends on one side with a toothed wall in the form of an arc, and the jaws (B) and (C) are attached to the longitudinal slot in a moveable manner, as well as the jaws (B) and (C) are attached to each other in a moveable manner, with the jaws (B) and (C) being interconnected by pull rods (E), which pull rods (E) are attached in a revolving manner to a cylinder (F) by means of a pin (H), where the cylinder (F) is attached in a sliding manner to the upper part of the body (A), which is closed by a cover (K), and a spring (S) is placed between the cylinder (F) and the cover (K), while the cover (K) has a opening for a shaft (J), with the shaft (J) on one side being connected to the cylinder (F) and on the other side to an actuator, with the jaws (B) and (C) in the lower part having on their lateral surfaces longitudinal pass-through holes, situated diagonally towards the longitudinal axis of the body (A), whereas in the side walls of the bottom part of the body (A) openings are made with a diameter corresponding to the diameters of the pins (D) and the width of longitudinal holes, using which pins (D) the jaws (B) and (C) are connected to the body (A), with the toothed walls of the jaws (B) and (C) having the form of an arc with a radius corresponding to the socket's (G) internal radius, where the walls of the spline teeth are inclined relative to the horizontal plane at an acute angle, whereas the socket (G) has the form of a hollowed-out cylinder, the internal wall of which has on its surface teeth that correspond to the teeth of the gripper's jaws (B) and (C).

2. A connector in accordance with claim 1, **characterized in that** the jaw (B) has a T-shaped horizontal cross-section, whereas the jaw (C) has a U-shaped horizontal cross-section.

3. A connector in accordance with claim 1 or claim 2, **characterized in that** the walls of the spline teeth on the walls of the jaws (B) and (C) are inclined relative to the horizontal plane at an acute angle, advantageously in the range between 30 and 60 degrees.

4. A connector it accordance with claim 1 or claim 3 **characterized in that** the diameter of the hollowed-out cylinder inside the socket (G) is approximately equal to the external diameter of the gripper body (A) in its lower section, on which section jaws (B) and (C) are attached.

5. A connector in accordance with claim 1 **characterized in that** the cylinder of the body (A) in the lower part changes into the form of a truncated cone, in which advantageously an electrical connector is placed.

6. A connector in accordance with claim 1, **characterized in that** the longitudinal holes in the jaws (B) and (C) are situated in such a way that they are inclined upwards to the inside of the body at an acute angle, preferably 45 degrees.

7. A connector in accordance with claim 1, **characterized in that** the body cylinder in its upper part expands to form a ring with mounting holes.

8. A connector in accordance with claim 1 **characterized in that** above the ring the body cylinder narrows again by taking the form of a hollowed-out cylinder, inside which the cylinder (F) moves.

9. A connector in accordance with claim 1 or claim 8 **characterized in that** the cylinder (F) in the lower part has a slot allowing the insertion of pull rod (E) rings.

10. A connector in accordance with claim 1 or claim 9 **characterized in that** the cylinder (F) in its upper part has at least one threaded hole (allowing a shaft J to be bolted to it), preferably centrally located.

11. A connector in accordance with claim 1 or claim 10 **characterized in that** the cover (K) has at least one pass-through hole, preferably centrally located.

12. A connector in accordance with claim 1 **characterized in that** the body (A) of the gripper and individual elements of the pull rod system are made of steel, advantageously stainless steel.

13. A connector in accordance with claim 1 **characterized in that** the socket is made of steel, advantageously stainless steel.

14. The use of an automatic connector according to claims from claim 1 to claim 13 is **characterized in that** the gripper, having the form of a cylinder with a perpendicular longitudinal slot, in which a pull rod system is installed, consisting of at least two jaws connected by a pull rod, advantageously two jaws (B) and (C), is attached to the lifting system, in particular through automatic transport cross-beam, while the socket (G) which has the form of a hollowed inside cylinder, the inner wall of which has teeth on its surface corresponding to the teeth on the gripper jaws (B) and (C), forms a part of a prefabricated building wall.

15. The construction wall, used in prefabricated construction, **characterized in that** on at least one edge there are mounted profiles, advantageously made of steel sheet, equipped with sets of sockets (G), which are advantageously arranged at the spacing of the Mp module.
